# EUROPEAN PATENT APPLICATION

(11) **EP 4 553 950 A1**
(43) Date of publication of application: **14.05.2025**
(21) Application number: 23209068.8
(22) Date of filing: 10.11.2023
(51) Int. Cl.: H01M 10/44, H01M 10/48, H01M 10/613, H01M 10/617, H01M 10/6568, H01M 10/625, H01M 10/63

(54) **A COMPUTER SYSTEM FOR CONTROLLING A FLOW PARAMETER OF A BATTERY COOLANT**

(71) Applicant: VOLVO TRUCK CORPORATION, 405 08 Göteborg (SE)
(72) Inventor: AHMED, Istaq, 422 44 GÖTEBORG (SE); PATIL, Mahesh Suresh, 422 41 GÖTEBORG (SE)
(74) Representative: Kransell & Wennborg KB

(57) **Abstract**

The present disclosure relates to a computer system comprising processing circuitry configured to identify, during a first time interval, a battery operating mode for a plurality of battery cells accommodated within a battery housing, wherein the battery operating mode belongs to a predetermined group of battery operating modes defined as cell temperature affecting operating modes, and subsequent to the first time interval, adjust a flow parameter of a coolant flowing within the battery housing in response to the identified battery operating mode belonging to the cell temperature affecting operating modes.

## Description

### TECHNICAL FIELD

The disclosure relates generally to batteries. In particular aspects, the disclosure relates to a computer system operative to control a flow parameter of a coolant flowing within a battery housing. The disclosure can be applied to any battery electric vehicle (BEV) such as e.g. heavy-duty vehicles, such as trucks, buses, and construction equipment, among other vehicle types. The disclosure can also be applied to cars and/or fuel cell electric vehicles (FCEV). Although the disclosure may be described with respect to a particular vehicle, the disclosure is not restricted to any particular vehicle.

### BACKGROUND

Maintaining the ideal temperature range within a battery pack is essential for both short-term performance and long-term durability. Precise temperature control ensures that the battery operates at its peak efficiency, delivering the expected capacity and output power for a wide range of applications. Simultaneously, it safeguards the battery's longevity by preventing temperature extremes, which can accelerate chemical degradation and shorten its operational lifespan. Furthermore, uniform temperature distribution across the battery module is critical to prevent localized stress and uneven cell performance. Inconsistent temperatures can lead to reduced overall performance, capacity loss, uneven aging between cells and safety concerns. Therefore, it is desirable to develop cooling solutions which are both efficient and which promotes a uniform temperature distribution in a battery pack.

### SUMMARY

According to a first aspect of the disclosure, there is provided a computer system comprising processing circuitry configured to identify, during a first time interval, a battery operating mode for a plurality of battery cells accommodated within a battery housing, wherein the battery operating mode belongs to a predetermined group of battery operating modes defined as cell temperature affecting operating modes, and subsequent to the first time interval, adjust a flow parameter of a coolant flowing within the battery housing in response to the identified battery operating mode belonging to the cell temperature affecting operating modes.

The first aspect of the disclosure may seek to reduce the risk of a non-uniform temperature distribution of the battery cells arranged inside the battery housing. Adjusting the coolant flow to provide for a more uniform temperature distribution, i.e. an even cooling distribution of the battery cells, can improve the operational lifetime of the battery cells. The disclosure is based on the insight that different battery operating modes may affect the temperature distribution of the battery cells negatively, i.e. to cause an uneven temperature distribution between the battery cells. After the battery cells have been exposed to a battery operating mode belonging to the cell temperature affecting operating modes, i.e. subsequent to the first time interval, the flow parameter can be adjusted to thereby enable for an improved, and more even, temperature distribution among the battery cells. Thus, the battery cells may, by adjusting the flow parameter of the coolant, be exposed to similar temperature levels. In particular, the temperature range between the coolest battery cell and the warmest battery cell may be reduced compared to conventional solutions.

In further detail, battery cells continuously operate in different operating modes. Such operating modes may include charging the battery cells with electric energy during e.g. regenerative braking by an electric traction motor, or discharging the battery cells of electric energy to the electric traction motor during propulsion. Charging and discharging may be provided at various power levels based on e.g. how the electric traction motor is operating. For example, the battery cells may be exposed to a relatively high charging level during regenerative braking at a long and steep downhill slope. According to another non-limiting example, the battery cells may be exposed to a relatively high discharging level during acceleration of a vehicle using the electric traction motor for propulsion. The computer system described above may thus identify the operating mode as belonging to the predefined group of battery operating modes defined as cell temperature affecting modes. When the battery cells are exposed to a temperature affecting mode, the battery cells are exposed to a relatively high temperature caused by charging or discharging. In a conventional cooling system with a substantially continuous coolant flow, the battery cells positioned closest to a coolant inlet may be exposed to sufficient cooling, while battery cells positioned further away from the coolant inlet may be exposed to less sufficient cooling due to the fact that the coolant is heated by the battery cells when travelling within the battery housing towards a coolant outlet. By discriminating between battery operating modes belonging to the cell temperature affecting operating modes, the coolant can thus be adjusted such that also the battery cells having a relatively high temperature level subsequent to the first time interval is obtaining sufficient cooling.

Optionally in some examples, including in at least one preferred example, the cell temperature affecting operating modes cause an uneven temperature distribution between the plurality of battery cells within the battery housing. A technical benefit may thus include that an even, i.e. uniform, temperature distribution may be obtained by adjusting the flow parameter of the coolant. The flow parameter may be adjusted in different manners as will be described in further detail below.

Optionally in some examples, including in at least one preferred example, the processing circuitry is configured to identify the battery operating mode in response to temperature data received from a temperature sensor arranged in the battery housing, the temperature data being indicative of an uneven temperature distribution between the plurality of battery cells. A technical benefit may include that real time data can be obtained.

Optionally in some examples, including in at least one preferred example, the processing circuitry is configured to identify the battery operating mode in response to a charging condition or a discharging condition of the battery cells during the first time interval. A technical benefit may include that a charging and discharging may affect the temperature level of the battery cells, and by identifying the charging/discharging condition, the computer system may be able to discriminate whether the battery cells are exposed to uneven temperature distribution or not. The use of a temperature sensor may in this example not be necessary, although a temperature sensor may be used in conjunction with identifying the battery operating mode in response to the charging/discharging condition. The temperature sensor may additionally be used for the purpose of monitoring the current temperature status, as well as to form a redundant control.

Optionally in some examples, including in at least one preferred example, the processing circuitry is configured to identify the battery operating mode in response to the battery cells being exposed to charging or discharging at a power level above a predetermined threshold power level during the first time interval. A technical benefit may include that a well-defined parameter for estimating that the battery cells are exposed to uneven temperature distribution can be provided.

Optionally in some examples, including in at least one preferred example, the processing circuitry is configured to identify the battery operating mode in response to the battery cells being exposed to charging or discharging at a power level above the predetermined threshold power level for a time period exceeding a first predetermined threshold time period. A technical benefit may include that a further well-defined parameter for estimating that the battery cells are exposed to uneven temperature distribution can be provided.

Optionally in some examples, including in at least one preferred example, the processing circuitry is configured to identify the battery operating mode in response to the battery cells being exposed to charging or discharging at a power level below the predetermined threshold power level for a time period exceeding a second predetermined threshold time period. Hereby, even when the battery cells are exposed to lower power levels, an uneven temperature distribution between the battery cells may occur when being exposed to the charging/discharging for a relatively extensive time period. According to a non-limiting example, overnight charging may be a charging condition belonging to the cell temperature affecting operating modes.

Optionally in some examples, including in at least one preferred example, the second predetermined threshold time period is longer than the first predetermined threshold time period.

Optionally in some examples, including in at least one preferred example, the processing circuitry is configured to identify the battery operating mode in response to a frequency of switching between charging and discharging during the first time interval, the frequency being above a predetermined threshold frequency.

Optionally in some examples, including in at least one preferred example, the processing circuitry is configured to adjust the flow parameter of the coolant by increasing or decreasing a flow rate of the coolant flowing within the battery housing. A technical benefit may include that the flow rate can, for example, be increased when the battery cells are exposed to an uneven temperature distribution. In such example, coolant can be forced through the battery housing to further cool down the battery cells.

Optionally in some examples, including in at least one preferred example, the processing circuitry is configured to adjust the flow parameter by changing a flow direction of the coolant from a first flow direction flowing within the battery housing during the first time interval to a second flow direction, the second flow direction being different from the first flow direction. A technical benefit may include that battery cells exposed to a low cooling capacity coolant during the first time interval may be exposed to a high cooling capacity coolant subsequent to the first time interval.

Optionally in some examples, including in at least one preferred example, the processing circuitry is configured to change the flow direction by controlling a valve connected to a coolant conduit arranged within the battery housing. A valve can rapidly change the coolant direction upon receiving a control signal from the processing circuitry.

Optionally in some examples, including in at least one preferred example, the processing circuitry is configured to control the valve to change from the first flow direction in which the coolant flows from a first opening to a second opening of the coolant conduit, to the second flow direction in which the coolant flows from the second opening to the first opening of the coolant conduit. A technical benefit may include that the battery cells positioned in the vicinity of the second opening may be exposed to sufficient cooling when changing to the second flow direction.

According to a second aspect, there is provided a vehicle comprising the computer system of any of the examples described above in relation to the first aspect, the vehicle further comprising an electric traction motor electrically connected to the plurality of battery cells.

Optionally in some examples, including in at least one preferred example, the processing circuitry is further configured to identify the battery operating mode in response to a weight of the vehicle exceeding a predetermined threshold weight.

Effects and features of the second aspect are largely analogous to those described above in relation to the first aspect.

According to a third aspect, there is provided a computer-implemented method, comprising identifying, by processing circuitry of a computer system and during a first time interval, a battery operating mode for a plurality of battery cells accommodated within a battery housing, wherein the battery operating mode belongs to a predetermined group of battery operating modes defined as cell temperature affecting operating modes, and subsequent to the first time interval, adjusting a flow parameter of a coolant flowing within the battery housing in response to the identified battery operating mode belonging to the cell temperature affecting operating modes.

Effects and features of the third aspect are largely analogous to those described above in relation to the first aspect.

According to a fourth aspect, there is provided a computer program product comprising program code for performing, when executed by the processing circuitry, the method of the third aspect.

According to a fifth aspect, there is provided a non-transitory computer-readable storage medium comprising instructions, which when executed by the processing circuitry, cause the processing circuitry to perform the method of the third aspect.

Effects and features of the fourth and fifth aspects are largely analogous to those described above in relation to the first aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
Fig. 1 is an exemplary illustration of a vehicle according to an example,
Fig. 2 is an exemplary illustration of a battery arrangement according to an example,
Fig. 3 is an exemplary illustration of cell temperature distribution of battery cells according to an example,
Fig. 4 is a further exemplary illustration of the battery arrangement according to an example,
Fig. 5 is an exemplary flow chart of a method of controlling a flow parameter of a coolant flowing within the battery housing according to an example, and
Fig. 6 is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

The disclosure described in the following may seek to mitigate the problem of non-uniform temperature distribution of the battery cells arranged inside a battery housing. A technical advantage may include that the overall operational lifetime of a battery comprising the battery cells can be obtained, i.e. an enhanced operational lifetime.

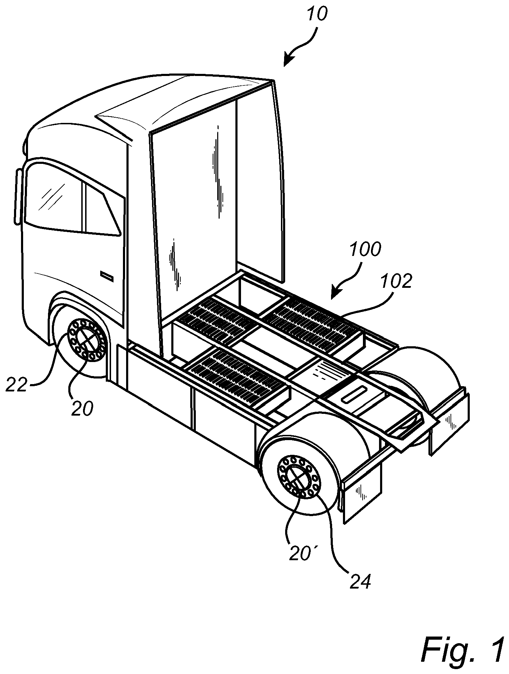

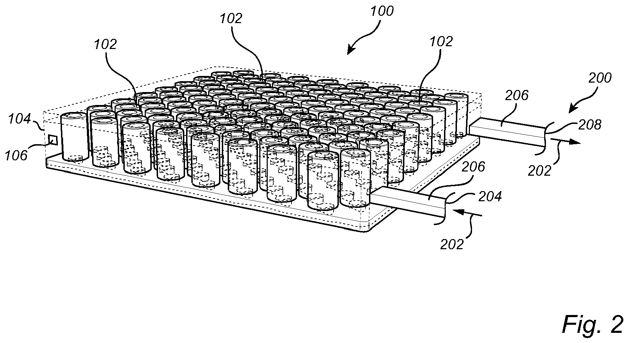

Turning to Fig. 1 which is an exemplary illustration of a vehicle 10. The vehicle 10 is in Fig. 1 exemplified as a truck. The vehicle 10 preferably comprises at least one electric traction motor 20 for propulsion. In Fig. 1, the vehicle 10 is depicted as comprising a first electric traction motor 20 in the form of a wheel hub motor connected to a front wheel 22 of the vehicle 10, and a second electric traction motor 20' in the form of a wheel hub motor connected to a rear wheel 24 of the vehicle 10. Other alternatives are of course conceivable, such as one electric traction motor connected to both front wheels and/or to both rear wheels, etc. Further, the vehicle 10 also comprises a battery arrangement 100. As can be seen in further detail in e.g. Fig. 2, the battery arrangement 100 comprises a plurality of battery cells 102. The battery cells 102 are electrically connected to the at least one electric traction motor 20, 20'. In further detail, electric energy is fed from the battery cells 102 to the at least one electric traction motor 20, 20' during propulsion, and electric energy is fed from the at least one electric traction motor 20, 20' to the battery cells 102 when the at least one electric traction motor 20, 20' generates electric power during braking.

In order to describe the battery arrangement 100 in further detail, reference is now made to Fig. 2. Fig. 2 is an exemplary illustration of the battery arrangement 100 according to an example. As can be seen in Fig. 2, the battery arrangement 100 comprises a battery housing 104. The plurality of battery cells 102 are arranged within the battery housing 104. In further detail, the battery cells 102 are preferably arranged at mutual distance from each other within the battery housing 104.

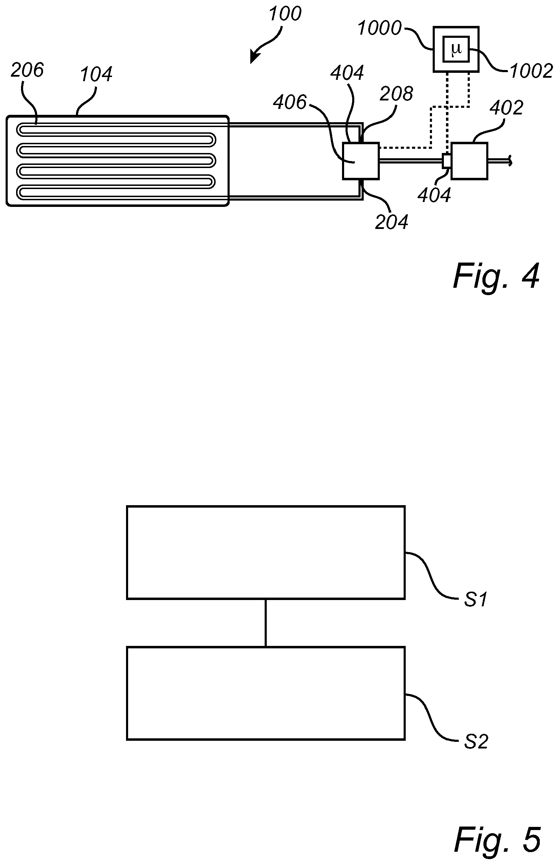

Further, the battery arrangement 100 also comprises a cooling system 200. The cooling system 200 is arranged to feed coolant 202 into the battery housing 104 to reduce the temperature level of the battery cells 102 accommodated within the battery housing 104. As can be seen in Fig. 2, coolant 202 is flowing into the battery housing 104 through a first opening 204 of a coolant conduit 206 and out from the battery housing 104 through a second opening 208 of the coolant conduit 206. Although not depicted in detail in Fig. 2, the coolant conduit 206 is extending through the inside of the battery housing 104, preferably such that each of the plurality of battery cells 102 can be temperature affected by the coolant. As can be seen in Fig. 4 and further described below, the coolant conduit is preferably extending in a serpentine pattern inside the battery housing 104. The coolant 202 is thus in Fig. 2 flowing in a first flow direction in which the coolant 202 is flowing between the first opening 204 and the second opening 208.

Moreover, the battery arrangement 100 in Fig. 2 is exemplified as comprising a temperature sensor 106 arranged inside the battery housing 104. The functionality of the temperature sensor 106 will be described in further detail below. It should be readily understood that the battery arrangement 100 may comprise more than one temperature sensor, i.e. a plurality of temperature sensors which are arranged at different positions within the battery housing 100. The temperature sensor(s) may alternatively, or additionally, be arranged on an exterior of the battery housing 104.

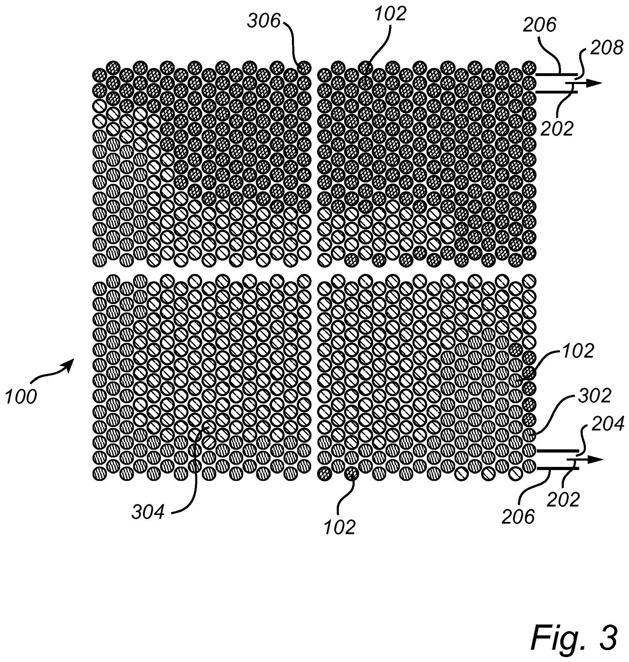

When solely controlling the flow of coolant to continuously flow at a steady flow rate and/or in the same direction, e.g. in the above described first flow direction, there is a risk that an uneven temperature distribution between the battery cells 102 within the battery housing 100 will be generated. Reference is now made to Fig. 3 which illustrates such uneven temperature distribution. In the non-limiting example depicted in Fig. 3, the coolant 202 is continuously flowing through the coolant conduit 206 in the first flow direction, i.e. between the first opening 204 and the second opening 208, and at a constant flow rate. When the coolant 202 is continuously flowing in this manner, the temperature level of the coolant will increase as the coolant 202 flows through the battery housing 104. As can be seen in Fig. 3, the battery cells having a pattern indicated with reference numeral 302 will be exposed to coolant with a relatively low temperature level. The temperature level of these battery cells will thus be sufficiently reduced. The temperature level of the coolant 202 on the other hand will increase when cooling the battery cells. As such, battery cells 102, such as those having a pattern indicated with reference numeral 304, arranged further away from the first opening 202 are slightly warmer than the battery cells arranged closer to the first 202. The coolant 202 will thus have a slightly higher temperature level when reaching the battery cells having the pattern illustrated with reference numeral 304. As the temperature level of the coolant 202 will continuously increase as the coolant 202 travels within the battery housing 104, the coolant will have less capacity to cool the battery cells arranged closest to the second opening 208. The battery cells having a pattern indicated with reference numeral 306 will thus have an even higher temperature level compared to the battery cells having the pattern indicated with reference numeral 304 since the coolant will have less capacity to sufficiently reduce the temperature level of these battery cells.

The uneven temperature distribution exemplified in Fig. 3 will cause the battery arrangement to have a reduced operational lifetime. The uneven temperature distribution may in particular be caused by coolant flowing at a continuous steady flow rate and/or in the same direction in combination with operating the battery cells in a predetermined group of battery operating modes defined as cell temperature affecting modes, i.e. battery modes where the battery cells are exposed to a relatively high temperature.

It should be readily understood that the temperature distribution in Fig. 3 is mere schematic to get a better understanding of the phenomena of an uneven temperature distribution. Obviously, the uneven temperature distribution can be different compared to the illustration of Fig. 3.

In order to describe an advantageous solution to mitigate the problem of non-uniform temperature distribution of the battery cells 102 arranged inside the battery housing 104, reference is made to Fig. 4 which is a schematic illustration of the battery arrangement 100 according to an example, in combination with Fig. 5 which is an exemplary flow chart of a method of controlling a flow parameter of the coolant 202 flowing within the battery housing according to an example. The plurality of battery cells 102 are not included in Fig. 4 in order to simplify and illustrate other features that may form part of the battery arrangement 100. The battery arrangement 100 in Fig. 4 corresponds to the battery arrangement 100 depicted in Fig. 2 although comprising further details which will be described in the following, i.e. the features in Fig. 2 should be construed as also included in the example depicted in Fig. 4.

As can be seen in Fig. 4, the battery arrangement 100 comprises the above described coolant conduit 206 which extends between the first opening 204 and the second opening 208. As indicated above, the coolant conduit 206 extends in a serpentine pattern within the battery housing 104. The battery arrangement 100 in Fig. 4 further comprises a coolant source 402 configured to contain the coolant 202. The coolant source 402 thus preferably be a coolant tank. As exemplified in Fig. 4, a coolant pump 404 is arranged downstream the coolant source 402. The coolant pump 404 is preferably configured to increase/decrease the flow rate of the coolant flowing from the coolant source 402 and into the battery housing 104. The coolant pump 404 is thus arranged in fluid communication between the coolant source 402 and the battery housing 104. Further, the exemplified battery arrangement 100 comprises a valve 406 connected to the coolant conduit 206. The valve 406 is arranged in downstream fluid communication with the coolant source 402, i.e. in fluid communication between the coolant source 402 and the battery housing 110. For the example depicted in Fig. 4, the valve 406 is arranged in fluid communication between the coolant pump 404 and the battery housing 104. The valve 406 is further connected to the first opening 204 and the second opening 208. As such, the valve 406 is configured to control the coolant to flow in either the above described first direction from the first opening 204 to the second opening 208, or in a direction from the second opening 208 to the first opening 204. The second flow direction is thus an opposite, different direction compared to the first flow direction.

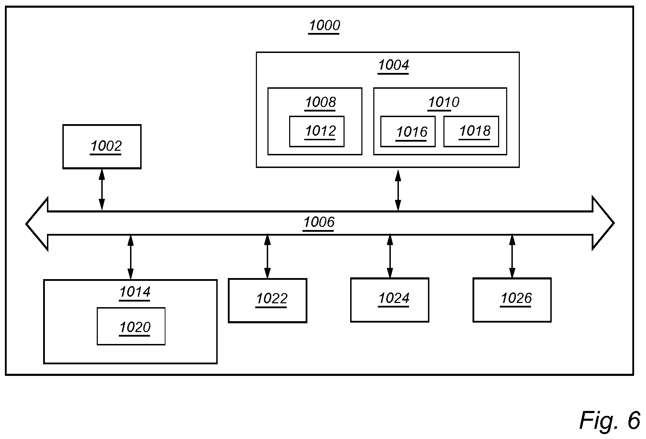

As further illustrated in Fig. 4, the coolant pump 404 as well as the valve 406 are electrically connected and controllable by a processing circuitry 1002 of a computer system 1000. A non-limiting example of the computer system 1000 will be given below with reference to Fig. 6.

During operation of the battery arrangement 100, the battery cells 102 either feeds electric energy to the electric traction motor 20, 20', or receive electric energy, either from the electric traction motor 20 when the electric traction motor 20 generates electric power during braking or when the battery is electrically connected to an external power source (not shown). During operation, in particular during a first time interval, the processing circuitry 1002 identifies S1 a battery operating mode for the plurality of battery cells 102 accommodated within the battery housing 104. The battery operating mode is also identified as belonging to a group of predefined battery operating modes defined as cell temperature affecting operating modes. Thus, the operating mode identified by the processing circuitry 1002 is affecting the temperature of the plurality of battery cells 102. In further detail, when the battery cells 102 are exposed to a cell temperature affecting operating mode, the temperature of the battery cells is increased, such as above a predetermined temperature threshold. The predetermined temperature threshold may be a range, wherein the range extends between a temperature of the battery cells prior to the first time interval and a temperature of the battery cells after the first time interval. According to an example, the temperature difference between the battery cells may be above a predetermined temperature difference threshold when the battery cells 102 are exposed to a cell temperature affecting operating mode.

Thereafter, i.e. subsequent to the first time interval, a flow parameter of the coolant 202 flowing within the battery housing 104 is adjusted S2 in response to the identified battery operating mode belonging to the cell temperature affecting operating modes. Thus, if the battery mode during the first time interval is identified as one of the cell temperature affecting operating modes, the flow parameter is adjusted after first time interval, i.e. after the first time interval has ended. As indicated above, adjusting the flow parameter may be to increase or decrease the flow rate of the coolant 202 flowing within the battery housing. According to another example, the flow parameter may alternatively, or additionally, be adjusted by changing the flow direction of the coolant, such as by controlling the valve 406, from the first flow direction to the second flow direction. When the battery operating mode during the first time interval is identified as one of the cell temperature affecting operating modes, there might be a risk that the temperature distribution between the battery cells will become uneven, such as exemplified in Fig. 3, when not adjusting the flow parameter. Thus, by adjusting the flow parameter, preferably according to any one of the above described examples, the problem of uneven temperature distribution between the battery cells 102 may be mitigated.

As indicated above, the cell temperature affecting modes are preferably battery modes of which the temperature of the battery cells is increased or in other ways causing an uneven temperature distribution between the plurality of battery cells 102. The battery operating mode may advantageously be identified in response to temperature data received from the above described temperature sensor 106. The battery operating mode may here belong to the predetermined group of battery operating modes when the temperature data indicates an uneven temperature distribution between the plurality of battery cells 102. The battery operating mode may also belong to the predetermined group of battery operating modes when the temperature data indicates an increase in temperature within the battery housing 104 above a predetermined temperature threshold, or temperature difference threshold.

The battery operating mode may be identified by other means than using temperature data from the temperature sensor 106. For example, the processing circuitry 1002 may alternatively, or additionally, identify the battery operating mode in response to a charging condition or a discharging condition of the battery cells during the first time interval. In particular, if the battery cells are exposed to charging or discharging at a power level above a predetermined threshold level during the first time interval, the battery operating mode can be identified as belonging to the group of predetermined group of battery operating modes since charging and discharging at a relatively high power level is associated with a temperature increase of the battery cells. The battery cells 102 may be exposed to charging or discharging at a power level above the predetermined threshold power level for a time period within the first time interval, which time period exceeds a first predetermined threshold time period. The time period may be a time period of substantive acceleration for the vehicle, or a time period of substantive regenerative braking.

However, the battery operating mode may also be identified in response to a charging or discharging at a power level below the predetermined threshold power level. In such situation, the battery cells may be exposed to such lower charging or discharging for a time period exceeding a second predetermined threshold time period, which second predetermined threshold time period is longer than the first predetermined threshold time period. This situation may, for example, relate to overnight charging of the battery cells. Hereby, the battery cells are exposed to a relatively low power level but during an extended time period.

Furthermore, it has also been identified that rapid changes between charging and discharging may affect the temperature of the battery cells 102. Thus, the processing circuitry 1002 may also identify the battery operating mode in response to a frequency of shifting between charging and discharging during the first time interval. The processing circuitry may advantageously determine that the battery operating mode belongs to the predetermined group of battery operating modes when the frequency is above a predetermined threshold frequency. Still further, the weight of the vehicle 10 may also affect the temperature of the battery cells 102. In particular, when the weight of the vehicle 10 is above a predetermined threshold weight, the battery operating mode may be identified as belonging to the predetermined group of operating modes when the battery cells are exposed to charging or discharging during operation of the vehicle 10.

Fig. 6 is a schematic diagram of a computer system 1000 for implementing examples disclosed herein. The computer system 1000 is adapted to execute instructions from a computer-readable medium to perform these and/or any of the functions or processing described herein. The computer system 1000 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 1000 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 1000 may comprise at least one computing device or electronic device capable of including firmware, hardware, and/or executing software instructions to implement the functionality described herein. The computer system 1000 may include processing circuitry 1002 (e.g., processing circuitry including one or more processor devices or control units), a memory 1004, and a system bus 1006. The computer system 1000 may include at least one computing device having the processing circuitry 1002. The system bus 1006 provides an interface for system components including, but not limited to, the memory 1004 and the processing circuitry 1002. The processing circuitry 1002 may include any number of hardware components for conducting data or signal processing or for executing computer code stored in memory 1004. The processing circuitry 1002 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 1002 may further include computer executable code that controls operation of the programmable device.

The system bus 1006 may be any of several types of bus structures that may further interconnect to a memory bus (with or without a memory controller), a peripheral bus, and/or a local bus using any of a variety of bus architectures. The memory 1004 may be one or more devices for storing data and/or computer code for completing or facilitating methods described herein. The memory 1004 may include database components, object code components, script components, or other types of information structure for supporting the various activities herein. Any distributed or local memory device may be utilized with the systems and methods of this description. The memory 1004 may be communicably connected to the processing circuitry 1002 (e.g., via a circuit or any other wired, wireless, or network connection) and may include computer code for executing one or more processes described herein. The memory 1004 may include non-volatile memory 1008 (e.g., read-only memory (ROM), erasable programmable read-only memory (EPROM), electrically erasable programmable read-only memory (EEPROM), etc.), and volatile memory 1010 (e.g., random-access memory (RAM)), or any other medium which can be used to carry or store desired program code in the form of machine-executable instructions or data structures and which can be accessed by a computer or other machine with processing circuitry 1002. A basic input/output system (BIOS) 1012 may be stored in the non-volatile memory 1008 and can include the basic routines that help to transfer information between elements within the computer system 1000.

The computer system 1000 may further include or be coupled to a non-transitory computer-readable storage medium such as the storage device 1014, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 1014 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 1014 and/or in the volatile memory 1010, which may include an operating system 1016 and/or one or more program modules 1018. All or a portion of the examples disclosed herein may be implemented as a computer program 1020 stored on a transitory or non-transitory computer-usable or computer-readable storage medium (e.g., single medium or multiple media), such as the storage device 1014, which includes complex programming instructions (e.g., complex computer-readable program code) to cause the processing circuitry 1002 to carry out actions described herein. Thus, the computer-readable program code of the computer program 1020 can comprise software instructions for implementing the functionality of the examples described herein when executed by the processing circuitry 1002. In some examples, the storage device 1014 may be a computer program product (e.g., readable storage medium) storing the computer program 1020 thereon, where at least a portion of a computer program 1020 may be loadable (e.g., into a processor) for implementing the functionality of the examples described herein when executed by the processing circuitry 1002. The processing circuitry 1002 may serve as a controller or control system for the computer system 1000 that is to implement the functionality described herein.

The computer system 1000 may include an input device interface 1022 configured to receive input and selections to be communicated to the computer system 1000 when executing instructions, such as from a keyboard, mouse, touch-sensitive surface, etc. Such input devices may be connected to the processing circuitry 1002 through the input device interface 1022 coupled to the system bus 1006 but can be connected through other interfaces, such as a parallel port, an Institute of Electrical and Electronic Engineers (IEEE) 1394 serial port, a Universal Serial Bus (USB) port, an IR interface, and the like. The computer system 1000 may include an output device interface 1024 configured to forward output, such as to a display, a video display unit (e.g., a liquid crystal display (LCD) or a cathode ray tube (CRT)). The computer system 1000 may include a communications interface 1026 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

### EXAMPLE LIST

Example 1. A computer system comprising processing circuitry configured to identify, during a first time interval, a battery operating mode for a plurality of battery cells accommodated within a battery housing, wherein the battery operating mode belongs to a predetermined group of battery operating modes defined as cell temperature affecting operating modes, and subsequent to the first time interval, adjust a flow parameter of a coolant flowing within the battery housing in response to the identified battery operating mode belonging to the cell temperature affecting operating modes.

Example 2. The computer system of example 1, wherein the cell temperature affecting operating modes cause an uneven temperature distribution between the plurality of battery cells within the battery housing.

Example 3. The computer system of example 2, wherein the processing circuitry is configured to identify the battery operating mode in response to temperature data received from a temperature sensor arranged in the battery housing, the temperature data being indicative of an uneven temperature distribution between the plurality of battery cells.

Example 4. The computer system of any one of the preceding examples, wherein the processing circuitry is configured to identify the battery operating mode in response to a charging condition or a discharging condition of the battery cells during the first time interval.

Example 5. The computer system of example 4, wherein the processing circuitry is configured to identify the battery operating mode in response to the battery cells being exposed to charging or discharging at a power level above a predetermined threshold power level during the first time interval.

Example 6. The computer system of example 5, wherein the processing circuitry is configured to identify the battery operating mode in response to the battery cells being exposed to charging or discharging at a power level above the predetermined threshold power level for a time period exceeding a first predetermined threshold time period.

Example 7. The computer system of any one of examples 5-6, wherein the processing circuitry is configured to identify the battery operating mode in response to the battery cells being exposed to charging or discharging at a power level below the predetermined threshold power level for a time period exceeding a second predetermined threshold time period.

Example 8. The computer system of examples 6 and 7, wherein the second predetermined threshold time period is longer than the first predetermined threshold time period.

Example 9. The computer system of any one of examples 4 - 8, wherein the processing circuitry is configured to identify the battery operating mode in response to a frequency of switching between charging and discharging during the first time interval, the frequency being above a predetermined threshold frequency.

Example 10. The computer system of any one of the preceding examples, wherein the processing circuitry is configured to adjust the flow parameter of the coolant by increasing or decreasing a flow rate of the coolant flowing within the battery housing.

Example 11. The computer system of any one of the preceding examples, wherein the processing circuitry is configured to adjust the flow parameter by changing a flow direction of the coolant from a first flow direction flowing within the battery housing during the first time interval to a second flow direction, the second flow direction being different from the first flow direction.

Example 12. The computer system of example 11, wherein the processing circuitry is configured to change the flow direction by controlling a valve connected to a coolant conduit arranged within the battery housing.

Example 13. The computer system of example 12, wherein the processing circuitry is configured to control the valve to change from the first flow direction in which the coolant flows from a first opening to a second opening of the coolant conduit, to the second flow direction in which the coolant flows from the second opening to the first opening of the coolant conduit.

Example 14. A vehicle comprising the computer system of any of the preceding examples.

Example 15. The vehicle of example 14, further comprising an electric traction motor electrically connected to the plurality of battery cells.

Example 16. The vehicle of any one of examples 14 - 15, wherein the processing circuitry is further configured to identify the battery operating mode in response to a weight of the vehicle exceeding a predetermined threshold weight.

Example 17. A computer-implemented method, comprising identifying, by processing circuitry of a computer system and during a first time interval, a battery operating mode for a plurality of battery cells accommodated within a battery housing, wherein the battery operating mode belongs to a predetermined group of battery operating modes defined as cell temperature affecting operating modes, and subsequent to the first time interval, adjusting a flow parameter of a coolant flowing within the battery housing in response to the identified battery operating mode belonging to the cell temperature affecting operating modes.

Example 18. A computer program product comprising program code for performing, when executed by the processing circuitry, the method of example 17.

Example 19. A non-transitory computer-readable storage medium comprising instructions, which when executed by the processing circuitry, cause the processing circuitry to perform the method of example 17.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system comprising processing circuitry configured to:
- identify, during a first time interval, a battery operating mode for a plurality of battery cells (102) accommodated within a battery housing (104), wherein the battery operating mode belongs to a predetermined group of battery operating modes defined as cell temperature affecting operating modes, and
- subsequent to the first time interval, adjust a flow parameter of a coolant (202) flowing within the battery housing in response to the identified battery operating mode belonging to the cell temperature affecting operating modes.

2. The computer system of claim 1, wherein the cell temperature affecting operating modes cause an uneven temperature distribution between the plurality of battery cells (102) within the battery housing.

3. The computer system of claim 2, wherein the processing circuitry is configured to identify the battery operating mode in response to temperature data received from a temperature sensor arranged in the battery housing, the temperature data being indicative of an uneven temperature distribution between the plurality of battery cells.

4. The computer system of any one of the preceding claims, wherein the processing circuitry is configured to identify the battery operating mode in response to a charging condition or a discharging condition of the battery cells during the first time interval.

5. The computer system of claim 4, wherein the processing circuitry is configured to identify the battery operating mode in response to the battery cells (102) being exposed to charging or discharging at a power level above a predetermined threshold power level during the first time interval.

6. The computer system of claim 5, wherein the processing circuitry is configured to identify the battery operating mode in response to the battery cells (102) being exposed to charging or discharging at a power level above the predetermined threshold power level for a time period exceeding a first predetermined threshold time period.

7. The computer system of any one of claims 5-6, wherein the processing circuitry is configured to identify the battery operating mode in response to the battery cells being exposed to charging or discharging at a power level below the predetermined threshold power level for a time period exceeding a second predetermined threshold time period, wherein the second predetermined threshold time period is longer than the first predetermined threshold time period.

8. The computer system of any one of claims 4-7, wherein the processing circuitry is configured to identify the battery operating mode in response to a frequency of switching between charging and discharging during the first time interval, the frequency being above a predetermined threshold frequency.

9. The computer system of any one of the preceding claims, wherein the processing circuitry is configured to adjust the flow parameter of the coolant by increasing or decreasing a flow rate of the coolant flowing within the battery housing.

10. The computer system of any one of the preceding claims, wherein the processing circuitry is configured to adjust the flow parameter by changing a flow direction of the coolant from a first flow direction flowing within the battery housing during the first time interval to a second flow direction, the second flow direction being different from the first flow direction.

11. A vehicle comprising the computer system of any of the preceding claims, wherein the vehicle comprises an electric traction motor electrically connected to the plurality of battery cells.

12. The vehicle of claim 11, wherein the processing circuitry is further configured to identify the battery operating mode in response to a weight of the vehicle exceeding a predetermined threshold weight.

13. A computer-implemented method, comprising:
- identifying (S 1), by processing circuitry of a computer system and during a first time interval, a battery operating mode for a plurality of battery cells accommodated within a battery housing, wherein the battery operating mode belongs to a predetermined group of battery operating modes defined as cell temperature affecting operating modes, and
- subsequent to the first time interval, adjusting (S2) a flow parameter of a coolant flowing within the battery housing in response to the identified battery operating mode belonging to the cell temperature affecting operating modes.

14. A computer program product comprising program code for performing, when executed by the processing circuitry, the method of claim 13.

15. A non-transitory computer-readable storage medium comprising instructions, which when executed by the processing circuitry, cause the processing circuitry to perform the method of claim 13.
